# EUROPÄISCHE PATENTSCHRIFT

(11) **EP 3 347 302 B1**
(45) Veröffentlichungstag und Bekanntmachung des Hinweises auf die Patenterteilung: **15.11.2023**
(21) Anmeldenummer: 16767196.5
(22) Anmeldetag: 12.09.2016
(51) Int. Cl.: B67C 3/22, F24F 3/14, F24F 3/16

(54) **VORRICHTUNG ZUR BEREITSTELLUNG VON REINLUFT IN EINER GETRÄNKEABFÜLLANLAGE**
DEVICE FOR PROVIDING CLEAN AIR IN A BEVERAGE FILLING PLANT
DISPOSITIF POUR FOURNIR DE L'AIR PUR DANS UNE INSTALLATION DE REMPLISSAGE DE BOISSON

(30) Priorität: 11.09.2015 DE 202015104817 U
(43) Veröffentlichungstag der Anmeldung: 18.07.2018
(73) Patentinhaber: KRONES AG, 93073 Neutraubling (DE)
(72) Erfinder: BRAUN, Franz, 93073 Neutraubling (DE); MUELLER, Holger, 93073 Neutraubling (DE); SOELLNER, Juergen, 93073 Neutraubling (DE); BRIKMANN, Max, 93073 Neutraubling (DE)
(74) Vertreter: Nordmeyer, Philipp Werner
(86) Internationale Anmeldenummer: PCT/EP2016/071392
(87) Internationale Veröffentlichungsnummer: WO 2017/042376

(56) Entgegenhaltungen:
- EP-A1- 2 116 353
- EP-A1- 2 578 504
- EP-A2- 1 645 813
- DE-A1- 2 740 738
- DE-U1-202004 001 619

## Beschreibung

### Technisches Gebiet

Die vorliegende Erfindung betrifft eine Vorrichtung zur Bereitstellung von Reinluft in einer Getränkeabfüllanlage, wobei die Reinluft typischerweise einem Abfüllreinraum, in welchem die Abfüllung des Getränks in einen zu befüllenden Behälter stattfindet, zugeführt wird.

### Stand der Technik

Es ist bekannt, unterschiedlichen Bereichen von Getränkeabfüllanlagen Reinluft zuzuführen, wobei bekannt ist, einen Abfüllreinraum, in welchem sich mindestens ein Füllorgan und eine Zuführvorrichtung für zu befüllende Behälter befindet, mit Reinluft zu beaufschlagen. Hierdurch kann eine verbesserte Hygiene in dem Reinraum erreicht werden und insbesondere ein verringerter Eintrag von Fremdstoffen und Mikroorganismen in den zu befüllenden Behälter sowie in das abgefüllte Getränk erreicht werden, so dass insgesamt eine verbesserte hygienische Abfüllleistung erreicht wird. Die EP 1 645 813 A2 offenbart eine Vorrichtung gemäß dem Oberbegriff des Anspruchs 1 und beschreibt weiterhin ein Verfahren und eine Anlage zur Belüftung von Reinräumen.

Üblicherweise wird die Reinluft in einem Abfüllreinraum unter einem leichten Überdruck bereitgestellt, so dass ein Eindringen von Partikeln und Mikroorganismen von außen, insbesondere auch im Bereich der Schleusen, über welche zu befüllende Behälter zugeführt werden oder befüllte Behälter aus dem Reinraum herausgeführt werden, verringert beziehungsweise vermieden werden kann. Mit anderen Worten wird ein steter Strom an Reinluft in den Abfüllreinraum bereitgestellt, wobei die Reinluft dann über jegliche Öffnung des Reinraumes nach außen hin abfließt und auf diese Weise eine Hygieneabdichtung bereitstellt. Auf diese Weise kann die Hygiene beim Abfüllen verbessert werden.

Es sind unterschiedliche Reinraumklassen bekannt. Hierbei wird üblicher Weise mittels unterschiedlicher Filtervorrichtungen die der jeweiligen Reinraumklasse entsprechende Reduzierung der Partikel in der Luft realisiert und diese Luft dann dem Reinraum zugeführt.

### Geänderte Beschreibungsseiten, Artikel 94(3) EPÜ vom 6. Dezember 2021

Es ist bekannt, in Getränkeabfüllanlagen eine Vorrichtung zur Bereitstellung von Reinluft vorzusehen, mittels welcher Reinluft bereitgestellt und in den Reinraum der Getränkeabfüllanlage eingebracht werden kann. Solche Vorrichtungen werden beispielsweise von der KRONES AG als "*Air Handling Unit*" in Getränkeabfüllanlagen verbaut, wobei die Air Handling Unit über Filter die entsprechende, dem Reinraum zuzuführende Luftqualität bereitstellt.

Weiterhin ist es bekannt, auch den Bereich der Kunststoffverarbeitung in einer Getränkeabfüllanlage, in der beispielsweise Kunststoffbehälter blasgeformt werden, mit Reinluft zu beaufschlagen. Hierbei wird die Reinluft unter anderem auch als Blasluft beim Blasformen von Kunststoffbehältern aus erhitzten Preforms verwendet.

Weiterhin wird der Blasreinraum, in welchem die hygienisch relevanten Bereiche der Kunststoffverarbeitung aufgenommen sind, mit Reinluft beaufschlagt und gespült, um auch hier das Eintreten von Partikeln und Mikroorganismen zu verhindern und entsprechend eine hygienische Bereitstellung von zu befüllenden Kunststoffbehältern zu ermöglichen. Für die Kunststoffverarbeitung muss jedoch Trockenluft bereitgestellt werden, um die Entstehung von Wasserdampf und die Kondensation von Wasser zu verhindern.

Die DE 27 40 738 A beschreibt ein Verfahren und eine Einrichtung zum Desinfizieren des Operationsraumes eines Krankenhauses.

### Darstellung der Erfindung

Ausgehend von dem bekannten Stand der Technik ist es eine Aufgabe der vorliegenden Erfindung, eine Vorrichtung zum Bereitstellen von Reinluft in einer Getränkeabfüllanlage bereitzustellen, welche einen effizienteren Aufbau der Getränkeabfüllanlage ermöglicht.

Diese Aufgabe wird durch die Vorrichtung zum Bereitstellen von Reinluft in einer Getränkeabfüllanlage mit den Merkmalen des Anspruchs 1 gelöst. Vorteilhafte Weiterbildungen ergeben sich aus den Unteransprüchen.

### Geänderte Beschreibungsseiten, Artikel 94(3) EPÜ vom 6. Dezember 2021

Entsprechend wird eine Vorrichtung zur Bereitstellung von Reinluft in einer Getränkeabfüllanlage, umfassend einen Anströmkanal mit mindestens einem Filter zur Voraufbereitung der über eine Zuluftzufuhr angesaugten Luft, vorgeschlagen, wobei sich an den Anströmkanal ein erster Abströmkanal mit mindestens einem Filter zur Aufbereitung der im Anströmkanal voraufbereiteten Luft zum Zuführen in einen Abfüllreinraum der Getränkeabfüllanlage anschließt. Erfindungsgemäß schließt sich an den Anströmkanal ein zweiter Abströmkanal zur Aufbereitung der im Anströmkanal voraufbereiteten Luft zum Zuführen in einen Blasreinraum zum Blasformen von Kunststoffbehältern an, wobei im zweiten Abströmkanal eine Entfeuchtungsvorrichtung zum Entfeuchten der voraufbereiteten Luft angeordnet ist.

Dadurch, dass sich an den Anströmkanal ein zweiter Abströmkanal zur Aufbereitung von Luft zur Zuführung in einen Blasreinraum zum Blasformen von Kunststoffbehältern anschließt, wobei der zweite Abströmkanal mit einer Entfeuchtungsvorrichtung zum Entfeuchten der Luft versehen ist, kann entsprechend eine kompakte Vorrichtung bereitgestellt werden, welche über den ersten Abströmkanal Reinluft bereitstellt, welche zur Beaufschlagung eines Abfüllreinraums zum hygienischen Abfüllen von Getränken vorgesehen ist, und zum anderen über den zweiten Abströmkanal getrocknete Reinluft bereitstellt, welche zur Verwendung im Blasreinraum einer Getränkeabfüllanlage vorgesehen ist.

Eine besonders effiziente Ausbildung ergibt sich unter anderem auch daraus, dass der Anströmkanal mit seinem Filter beziehungsweise seinen mehreren Filtern für den ersten und den zweiten Abströmkanal gemeinsam genutzt werden kann. Damit ergibt sich, dass für die Bereitstellung der zwei unterschiedlichen Lufttypen nur ein einziger Anströmkanal und entsprechend nur eine einzige Voraufbereitung der Luft durch die im Anströmkanal vorgesehenen Filter durchgeführt werden muss. Entsprechend müssen auch der Anströmkanal und die darin vorgesehenen Aggregate, wie beispielsweise die Filter, und auch der bevorzugt im Anströmkanal vorgesehene zentrale Ventilator, welcher die voraufbereitete Luft sowohl zum ersten als auch zum zweiten Abströmkanal fördert, nur einmal vorgesehen werden, und können entsprechend effizient für beide Lufttypen verwendet werden.

Auf diese Weise wird, neben dem Einsparen zusätzlicher Komponenten, auch Bauraum eingespart, so dass die vorgeschlagene Vorrichtung insgesamt eine geringere Bauraumforderung aufweist, als die aus dem Stand der Technik bekannte Bereitstellung von zwei separaten Vorrichtungen zur Aufbereitung der Luft, einmal für den Abfüllreinraum und einmal für den Blasreinraum.

Bevorzugt umfasst der Anströmkanal entsprechend einen zentralen Ventilator, welcher die über die Zuluftzufuhr zugeführte Luft sowohl durch den Anströmkanal als auch durch den ersten Abströmkanal und den zweiten Abströmkanal fördert. Damit kann mittels eines einzigen zentralen Ventilators die Bereitstellung und Förderung der beiden unterschiedlichen Lufttypen erreicht werden, wodurch sich eine höhere Effizienz und eine geringere Bauraumforderung ergibt.

Um eine angemessene Voraufbereitung der Luft in dem Anströmkanal zu erreichen, umfasst der Anströmkanal bevorzugt mindestens einen Grobstaubfilter und/oder mindestens einen Feinstaubfilter. Der Grobstaubfilter kann dabei besonders bevorzugt ein Filter der Filterklasse G3 oder G4 sein und der Feinstaubfilter ein Filter der Filterklasse M5 bis F9. Mittels dieser Filtertechnik kann eine Voraufbereitung der Luft in dem Anströmkanal erreicht werden.

Besonders bevorzugt ist in dem Anströmkanal ein erster Feinstaubfilter der Filterklasse M5 oder M6 vorgesehen und stromabwärts des ersten Feinstaubfilters ein zweiter Feinstaubfilter der Filterklasse F7 bis F9 vorgesehen. Damit kann durch die stufenweise Filterung auf effiziente Weise eine angemessene Voraufbereitung der angesaugten Umgebungsluft erfolgen.

Die Geräuschkomponenten können durch das Bereitstellen eines Schalldämpfers zum Dämmen des Schalls im Anströmkanal gedämpft werden, wobei der Schalldämpfer bevorzugt stromabwärts eines Grobstaubfilters angeordnet ist, um eine Verschmutzung des Schalldämpfers mit Grobstaubpartikeln zu verhindern.

In dem ersten Abströmkanal ist bevorzugt ein Wärmetauscher vorgesehen, mittels dessen die in dem ersten Abströmkanal aufbereitete Luft auf eine Temperatur gebracht werden kann, mittels der in dem Abfüllreinraum das dort gewünschte Temperaturniveau erreicht werden kann.

Um eine Reinfilterung der Luft zu erreichen, ist in dem ersten Abströmkanal bevorzugt ein Schwebstofffilter vorgesehen, wobei der Schwebstofffilter bevorzugt ein Filter der Filterklasse E10 bis U16, besonders bevorzugt der Filterklasse H13 oder H14 ist.

In dem ersten Abströmkanal ist weiter bevorzugt eine Sterilisationsvorrichtung zum Sterilisieren der stromabwärts der Sterilisationsvorrichtung liegenden Bereiche des ersten Abströmkanals vorgesehen, besonders bevorzugt zum Sterilisieren eines stromabwärts der Sterilisationsvorrichtung angeordneten Schwebstofffilters, wobei die Sterilisationsvorrichtung bevorzugt ein H₂O₂-Injektor ist. Damit kann bei Durchführung eines Reinigungsbetriebs oder Sterilisationsbetriebs der Getränkeabfüllanlage eine Sterilisierung aller mit dem Sterilisationsmedium beaufschlagten Bereiche erreicht werden.

Auch der zweite Abströmkanal umfasst bevorzugt einen nach der Entfeuchtungseinheit gelagerten Wärmetauscher, um auf diese Weise auch die dem Blasreinraum zugeführte getrocknete Reinluft auf eine Temperatur zu bringen, die im Blasreinraum für das dort gewünschte Temperaturniveau sorgt.

Bevorzugt weist auch der zweite Abströmkanal eine Sterilisationsvorrichtung zum Sterilisieren der stromabwärts der Sterilisationsvorrichtung liegenden Bereiche des zweiten Abströmkanals auf, besonders bevorzugt zum Sterilisieren eines stromabwärts der Sterilisationsvorrichtung angeordneten Schwebstofffilters, wobei die Sterilisationsvorrichtung bevorzugt ein H₂O₂-Injektor ist.

Um letztendlich die Reinfiltrierung der Luft zu erreichen, umfasst der zweite Abströmkanal bevorzugt auch einen Schwebstofffilter, wobei der Schwebstofffilter bevorzugt ein Filter der Filterklasse E10 bis U16, besonders bevorzugt der Filterklasse H13 oder H14, ist.

Ein besonders einfacher Aufbau der Entfeuchtungseinrichtung kann einen Luftkühler und einen Tropfenabscheider umfassen.

Um eine effiziente Windführung zu erreichen, werden der erste Abströmkanal und der zweite Abströmkanal bevorzugt parallel zueinander aus dem Anströmkanal heraus geführt.

Ein kompakter Aufbau, der auch eine vereinfachte Integration in eine Getränkabfüllanlage erreicht und die Wartung vereinfacht, kann dadurch erreicht werden, dass der Anströmkanal, der erste Abströmkanal und der zweite Abströmkanal in einem gemeinsamen Gehäuse aufgenommen sind.

Besonders bevorzugt sind sämtliche Aggregate, Filter, der Anströmkanal sowie die zwei Abströmkanäle in einem einzigen Gehäuse vorgesehen, so dass insgesamt die Bauraumforderung reduziert werden kann und ein kompakter Aufbau der Vorrichtung dahingehend erreicht werden kann, dass auf zusätzliche strukturelle Maßnahmen beim Aufbau einer Getränkeabfüllanlage verzichtet werden kann.

Eine noch kompaktere Ausbildung der Zuluft- und Ablufttechnik in der Getränkabfüllanlage ergibt sich, wenn ein Abluftventilator zum Abführen von Luft aus dem Blasreinraum oder dem Abfüllreinraum vorgesehen ist, wobei der Abluftventilator bevorzugt in einem gemeinsamen Gehäuse der Vorrichtung angeordnet ist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische, perspektivische Darstellung einer Vorrichtung zur Bereitstellung von Reinluft, bei welcher die Außenwände transparent gestaltet sind, von einer ersten Seite aus, und
- Figur 2: die Vorrichtung aus Figur 1 von der anderen Seite aus betrachtet.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

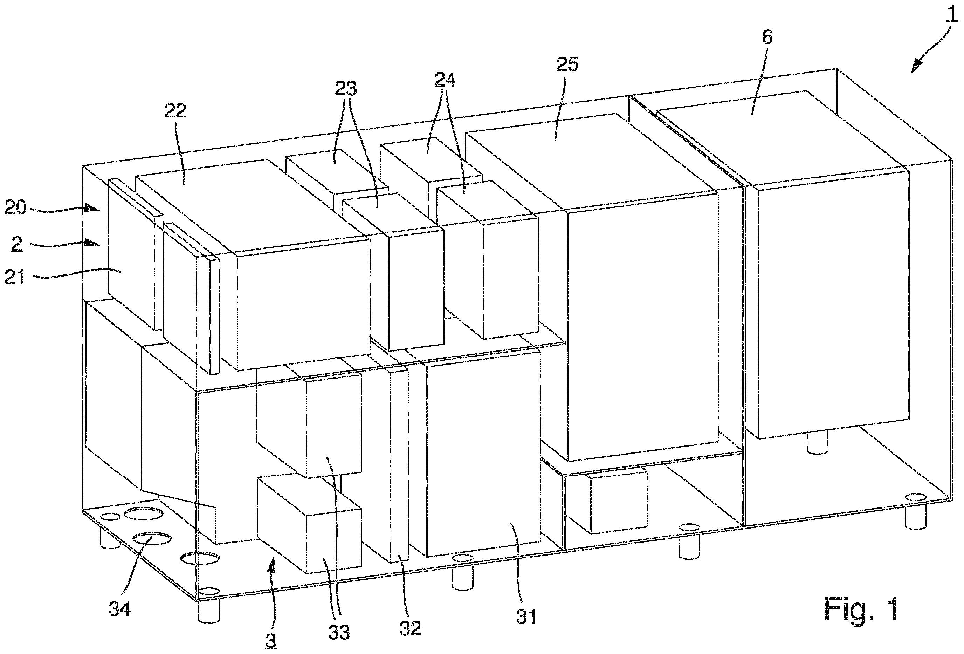

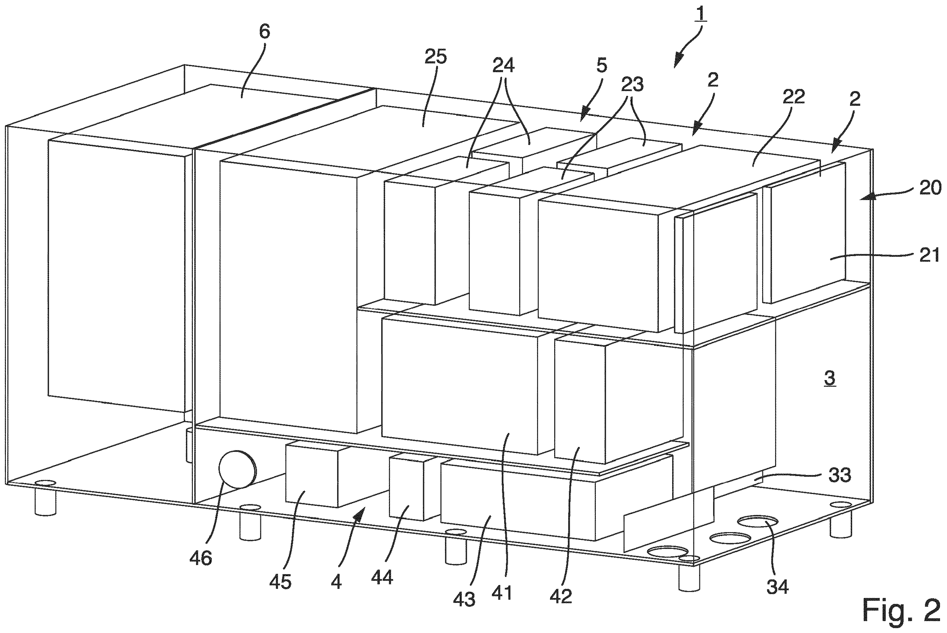

Figur 1 zeigt schematisch und in einer ersten Darstellung, in welcher die Außenwände der Vorrichtung nur schematisch angedeutet sind und quasi transparent dargestellt sind, eine Vorrichtung 1 zum Bereitstellen von Reinluft in einer Getränkeabfüllanlage. In Figur 2 ist diese Vorrichtung 2 von der anderen Seite aus gezeigt, wobei die Darstellung der Seitenwände ebenfalls quasi transparent ist.

Ein Anströmkanal 2 ist vorgesehen, welcher über eine Zuluftzufuhr 20 Umgebungsluft ansaugt, die dann durch einen ersten Grobstaubfilter 21 vorgefiltert wird. Die im Grobstaubfilter 21 vorgefilterte Luft wird durch einen Schalldämpfer 22 geleitet, um Strömungsgeräusche und Geräusche eines nachgelagerten zentralen Ventilators 25 nicht über die Zuluftzufuhr 20 in die Umgebung dringen zu lassen. Der zentrale Ventilator 25 ist in dem Anströmkanal 2 angeordnet.

Der Grobstaubfilter 21 ist bevorzugt ein Filter der Filterklasse G3 oder G4, um Partikel > 10 µm ausfiltern zu können, die sich in der Umgebung befinden.

Danach wird die Luft mittels eines ersten Feinstaubfilters 23 sowie eines zweiten Feinstaubfilters weiter voraufbereitet und dann einem zentralen Ventilator 25 zugeleitet. Der erste Feinstaubfilter 23 ist bevorzugt als ein Filter der Filterklasse M5 oder M6 vorgesehen und der stromabwärts des ersten Feinstaubfilters 23 angeordnete zweite Feinstaubfilter 24 ist bevorzugt ein Filter der Filterklasse F7 bis F9. Auf diese Weise können Partikel zwischen 1 - 10 µm aus der voraufbereiteten Luft ausgefiltert werden, bevor die Luft dem zentralen Ventilator 25 zugeführt wird.

Entsprechend kann Umgebungsluft von der Zuluftzufuhr 20 über die Filter 21, 23 und 24 dem zentralen Ventilator 25 zugeführt werden. Nach dem zentralen Ventilator 25 kann die durch die Filter 21, 23 und 24 vorgereinigte Luft entsprechend für die nachfolgende Behandlung bereitgestellt werden.

An den Anströmkanal 2 schließen sich ein erster Abströmkanal 3 und ein zweiter Abströmkanal 4 an. Der erste Abströmkanal 3 ist in Figur 1 besonders gut zu erkennen und der zweite Abströmkanal 4 ist aus Figur 2 besonders gut zu erkennen.

In dem gezeigten Ausführungsbeispiel geht der Anströmkanal 2 direkt in den ersten Abströmkanal 3 und den zweiten Abströmkanal 4 über. Der erste Abströmkanal 3 und der zweite Abströmkanal 4 gehen im Wesentlichen parallel aus dem Anströmkanal 2 hervor, so dass eine effiziente Windführung gegeben ist. Vom zentralen Ventilator 25 wird entsprechend die mittels der Filter 21, 23 und 24 voraufbereitete Luft an den ersten Abströmkanal 3 und an den zweiten Abströmkanal 4 übergeben.

Der erste Abströmkanal 3 übernimmt die vom Anströmkanal 2 bereitgestellte voraufbereitete Luft, die durch den zentralen Ventilator 25 gefördert wird, und führt sie zunächst durch einen Wärmetauscher 31. Der Wärmetauscher 31 dient dazu, die voraufbereitete Luft auf eine Temperatur zu bringen, welche in dem Abfüllreinraum der Getränkeabfüllanlage für das gewünschte Temperaturniveau sorgt. Entsprechend wird in dem Wärmetauscher 31 die voraufbereitete Luft so abgekühlt oder erwärmt, dass sie beim Erreichen des Abfüllreinraums entsprechend die dort gewünschte Temperatur bereitstellen kann. Hierbei wird die auch über die diversen Rohrleitungen eingetragene beziehungsweise abgezogene Wärmemenge bei der Festlegung der Temperatur mit berücksichtigt. Weiterhin wird berücksichtigt, dass über die im Anströmkanal 2 vorgesehenen Aggregate, insbesondere den zentralen Ventilator 25, die voraufbereitete Luft erwärmt wird und diese Wärmemenge gegebenenfalls wieder entfernt werden muss.

Nach dem Wärmetauscher 31 ist eine Sterilisationsvorrichtung 32 vorgesehen, welche hier in Form eines H₂O₂-Injektors vorgesehen ist. Die Sterilisationsvorrichtung 32 ermöglicht es, beispielsweise über das Einbringen von gasförmigem H₂O₂, die der Sterilisationsvorrichtung 32 nachgelagerten Teile des Abströmkanals 3 sowie sämtliche Rohrleitungen, die sich bis zu dem Abfüllreinraum hin erstrecken, mit einem Sterilisationsmittel zu beaufschlagen. Auf diese Weise kann eine zuverlässige Sterilisierung dieser Bereiche erreicht werden, wenn die Getränkeabfüllanlage beispielsweise in einem Reinigungs- oder Sterilisationsbetrieb gefahren wird.

Es ist weiterhin möglich, über eine entsprechende Dosage von gasförmigem H₂O₂ mittels der Sterilisationsvorrichtung 32 auch den gesamten Abfüllreinraum mit dem Sterilisationsmittel zu beaufschlagen, um entsprechend eine umfassende Sterilisierung sowohl der relevanten Bereiche der Vorrichtung 1 zum Bereitstellen der Reinluft, als auch des Abfüllreinraums der Getränkeabfüllanlage selbst zu erreichen.

An die Sterilisationsvorrichtung 32 schließt sich ein Schwebstofffilter 33 an, wobei der Schwebstofffilter 33 bevorzugt ein Filter der Filterklasse E10 bis U16, besonders bevorzugt der Filterklasse H13 oder H14, ist. Mittels des Schwebstofffilters, der als Endfilter für die Bereitstellung der Reinluft für den Abfüllreinraum dient, kann eine entsprechend aufbereitete Reinluft dem Abfüllreinraum zugeführt werden.

Über Abströmöffnungen 34 wird die dann enstprechend aufbereitete Reinluft an ein Leitungssystem übergeben, welches die in dem ersten Abströmkanal 3 gereinigte Reinluft an den Abfüllreinraum der Getränkeabfüllanlage übergibt.

In Figur 2 ist der zweite Abströmkanal 4 gezeigt, welcher sich ebenfalls an den Anströmkanal 2 anschließt und in welchen mittels des zentralen Ventilators 25 die über den Anströmkanal 2 zugeführte und voraufbereitete Luft zugeführt wird. An den Anströmkanal 2 schließt sich in dem zweiten Abströmkanal 4 ein Luftkühler 41 an, an welchen sich ein Tropfenabscheider 42 anschließt. Der Luftkühler 41 und der Tropfenabscheider 42 bilden gemeinsam eine Entfeuchtungsvorrichtung zum Entfeuchten der voraufbereiteten Luft aus. Mittels des Luftkühlers 41 und des Tropfenabscheiders 42 ist entsprechend eine Trocknung der Luft möglich, so dass die über den Anströmkanal 2 zugeführte Luft feuchter ist, als die nach der Entfeuchtungsvorrichtung im Abströmkanal 4 vorliegende Luft. Die tatsächlich erreichte Trocknungswirkung hängt von der Kühlleistung des Luftkühlers 41 und der Abscheidungsleistung des Tropfenabscheiders 42 ab.

An den Luftkühler 41 und den Tropfenabscheider 42 schließt sich in dem zweiten Abströmkanal 4 ein Wärmetauscher 43 an, mittels welchem die schlussendlich in den Blasreinraum zugeführte Luft auf die dort gewünschte Temperatur gebracht wird.

An den Wärmetauscher 43 schließt sich auch hier eine Sterilisationsvorrichtung 44 an, mittels welcher beispielsweise gasförmiges H₂O₂ der getrockneten Luft beigefügt werden kann, um zumindest in einem Reinigungs- und/oder Sterilisationsbetrieb der Getränkeabfüllanlage eine Sterilisation der stromabwärts der Sterilisationsvorrichtung 44 liegenden Bereiche des zweiten Abströmkanals 4 und bevorzugt auch der danach liegenden Leitungen und Reinraumbereiche zu erreichen.

An die Sterilisationsvorrichtung 44 anschließend ist ein Schwebstofffilter 45 vorgesehen, wobei der Schwebstofffilter 45 bevorzugt ein Filter der Filterklasse E10 bis U16, besonders bevorzugt der Filterklasse H13 oder H14, ist. Mittels des Schwebstofffilters 45 kann eine hochreine Filterung der getrockneten Luft erreicht werden, so dass die für den Blasreinraum vorgesehene Reinheitsstufe erreicht werden kann.

Über die Abströmöffnung 46 wird die getrocknete Reinluft dann an ein entsprechendes Leitungssystem übergeben, welches die getrocknete Reinluft dann in den Blasreinraum führt, in welchem die getrocknete Reinluft dann beispielsweise zum Blasformen verwendet wird beziehungsweise zum Überströmen des Blasbereichs, um auch hier die entsprechenden Hygieneanforderungen zu erreichen.

Bevorzugt sind sämtliche Aggregate, so wie in den Figuren 1 und 2 gezeigt, in einem einzigen Gehäuse 5 vorgesehen. Entsprechend können die zwei unterschiedlichen Reinlufttypen mittels der Vorrichtung 1 bereitgestellt werden, wobei die Vorrichtung 1 eine gegenüber den herkömmlichen, aus wenigstens zwei unterschiedlichen Vorrichtungen bestehenden Anordnungen deutlich bezüglich der Bauraumforderung verkleinert werden kann.

Zusätzlich kann in dem Gehäuse 5 auch ein Abluftventilator 6 vorgesehen sein, über welchen beispielsweise die Luft aus dem Blasreinraum oder dem Abfüllreinraum abgezogen werden kann und dann entsprechend nachbehandelt an die Umgebung abgegeben werden kann. Dies ist insbesondere dann von Bedeutung, wenn über die Sterilisationsvorrichtungen ein Sterilisationsmittel, beispielsweise gasförmiges H₂O₂, in den Blasreinraum oder den Abfüllreinraum eingebracht wurde, und dieses dann so abgezogen werden muss, dass eine Gefährdung der Mitarbeiter in der Abfüllhalle ausgeschlossen wird.

Auch durch diese Ausbildung, insbesondere in Verbindung mit dem Abluftventilator 6, welcher ebenfalls in dem gemeinsamen Gehäuse 5 angeordnet ist, kann ein besonders kompakter Aufbau erreicht werden.

### Bezugszeichenliste

- 1: Vorrichtung zur Bereitstellung von Reinluft
- 2: Anströmkanal
- 20: Zuluftzufuhr
- 21: Grobstaubfilter
- 22: Schalldämpfer
- 23: Feinstaubfilter
- 24: Feinstaubfilter
- 25: zentraler Ventilator
- 3: erster Abströmkanal
- 31: Wärmetauscher
- 32: Sterilisationsvorrichtung
- 33: Schwebstofffilter
- 34: Abströmöffnung
- 4: zweiter Abströmkanal
- 41: Luftkühler
- 42: Tropfenabscheider
- 43: Wärmetauscher
- 44: Sterilisationsvorrichtung
- 45: Schwebstofffilter
- 46: Abströmöffnung
- 5: Gehäuse
- 6: Abluftventilator

## Patentansprüche

1. Vorrichtung (1) zur Bereitstellung von Reinluft in einer Getränkeabfüllanlage, umfassend einen Anströmkanal (2) mit mindestens einem Filter (21, 23, 24) zur Voraufbereitung der über eine Zuluftzufuhr (20) angesaugten Luft, wobei sich an den Anströmkanal (2) ein erster Abströmkanal (3) mit mindestens einem Filter (33) zur Aufbereitung der im Anströmkanal (2) voraufbereiteten Luft zum Zuführen in einen Abfüllreinraum der Getränkeabfüllanlage anschließt, wodurch über den ersten Abströmkanal Reinluft bereitstellbar ist,
**dadurch gekennzeichnet, dass**
sich an den Anströmkanal (2) ein zweiter Abströmkanal (4) zur Aufbereitung der im Anströmkanal (2) voraufbereiteten Luft zum Zuführen in einen Blasreinraum zum Blasformen von Kunststoffbehältern anschließt, wobei im zweiten Abströmkanal (4) eine Entfeuchtungsvorrichtung (41, 42) zum Entfeuchten der voraufbereiteten Luft angeordnet ist, wodurch über den zweiten Abströmkanal getrocknete Reinluft bereitstellbar ist.

2. Vorrichtung (1) gemäß Anspruch 1, **dadurch gekennzeichnet, dass** der Anströmkanal (2) einen zentralen Ventilator (25) umfasst, welcher die über die Zuluftzufuhr (20) zugeführte Luft sowohl durch den Anströmkanal (2), als auch durch den ersten Abströmkanal (3) und den zweiten Abströmkanal (4) fördert.

3. Vorrichtung (1) gemäß Anspruch 1 oder 2, **dadurch gekennzeichnet, dass** der Anströmkanal (2) mindestens einen Grobstaubfilter (21), der vorzugsweise ein Filter der Filterklasse G3 oder G4 ist, und/oder mindestens einen Feinstaubfilter (23, 24), der vorzugsweise ein Filter der Filterklasse M5 bis F9 ist, umfasst.

4. Vorrichtung (1) gemäß Anspruch 3, **dadurch gekennzeichnet, dass** ein erster Feinstaubfilter (23) der Filterklasse M5 oder M6 vorgesehen ist und stromabwärts des ersten Feinstaubfilters (23) ein zweiter Feinstaubfilter (24) der Filterklasse F7 bis F9 vorgesehen ist.

5. Vorrichtung (1) gemäß einem der vorstehenden Ansprüche, **dadurch gekennzeichnet, dass** der Anströmkanal (2) einen Schalldämpfer (22) zum Dämmen des Schalls umfasst.

6. Vorrichtung (1) gemäß einem der vorstehenden Ansprüche, **dadurch gekennzeichnet, dass** der erste Abströmkanal (3) einen Wärmetauscher (31) umfasst.

7. Vorrichtung (1) gemäß einem der vorstehenden Ansprüche, **dadurch gekennzeichnet, dass** der erste Abströmkanal (3) einen Schwebstofffilter (33) umfasst, wobei der Schwebstofffilter (33) bevorzugt ein Filter der Filterklasse E10 bis U16, besonders bevorzugt der Filterklasse H13 oder H14 ist.

8. Vorrichtung (1) gemäß einem der vorstehenden Ansprüche, **dadurch gekennzeichnet, dass** der erste Abströmkanal (3) eine Sterilisationsvorrichtung (32) zum Sterilisieren der stromabwärts der Sterilisationsvorrichtung (32) liegenden Bereiche des ersten Abströmkanals (3) umfasst, wobei die Sterilisationsvorrichtung bevorzugt ein H₂O₂-Injektor ist.

9. Vorrichtung (1) gemäß einem der vorstehenden Ansprüche, **dadurch gekennzeichnet, dass** der zweite Abströmkanal (4) einen nach der Entfeuchtungsvorrichtung (41, 42) gelagerten Wärmetauscher (43) umfasst.

10. Vorrichtung (1) gemäß einem der vorstehenden Ansprüche, **dadurch gekennzeichnet, dass** der zweite Abströmkanal (4) eine Sterilisationsvorrichtung (44) zum Sterilisieren der stromabwärts der Sterilisationsvorrichtung (44) liegenden Bereiche des zweiten Abströmkanals (4) umfasst, wobei die Sterilisationsvorrichtung bevorzugt ein H₂O₂-Injektor ist.

11. Vorrichtung (1) gemäß einem der vorstehenden Ansprüche, **dadurch gekennzeichnet, dass** der zweite Abströmkanal (4) einen Schwebstofffilter (45) umfasst, wobei der Schwebstofffilter (45) bevorzugt ein Filter der Filterklasse E10 bis U16, besonders bevorzugt der Filterklasse H13 oder H14 ist.

12. Vorrichtung (1) gemäß einem der vorstehenden Ansprüche, **dadurch gekennzeichnet, dass** die Entfeuchtungseinrichtung einen Luftkühler (41) und einen Tropfenabscheider (42) umfasst.

13. Vorrichtung (1) gemäß einem der vorstehenden Ansprüche, **dadurch gekennzeichnet, dass** der Anströmkanal (2), der erste Abströmkanal (3) und der zweite Abströmkanal (4) in einem gemeinsamen Gehäuse (5) aufgenommen sind.

14. Vorrichtung (1) gemäß einem der vorstehenden Ansprüche, **dadurch gekennzeichnet, dass** der erste Abströmkanal (3) und der zweite Abströmkanal (4) parallel zueinander aus dem Anströmkanal (2) geführt werden.

15. Vorrichtung (1) gemäß einem der vorstehenden Ansprüche, **dadurch gekennzeichnet, dass** ein Abluftventilator (6) zum Abführen von Luft aus dem Blasreinraum oder dem Abfüllreinraum vorgesehen ist.

## Claims

1. Device (1) for providing clean air in a beverage filling plant, comprising an inflow duct (2) with at least one filter (21, 23, 24) for pretreating the air sucked in via a supply air inlet (20), wherein a first outflow duct (3) with at least one filter (33) for treating the air pretreated in the inflow duct (2) adjoins the inflow duct (2) for feeding into a filling clean room of the beverage filling plant, whereby clean air can be provided via the first outflow duct,
**characterised in that**
a second outflow duct (4) for conditioning the air pre-conditioned in the inflow duct (2) adjoins the inflow duct (2) for feeding into a blowing clean room for blow-moulding plastic containers, wherein a dehumidification device (41, 42) for dehumidifying the pre-conditioned air is arranged in the second outflow duct (4), whereby dried clean air can be provided via the second outflow duct.

2. Device (1) according to claim 1, **characterised in that** the inflow duct (2) comprises a central fan (25) which conveys the air supplied via the supply air inlet (20) both through the inflow duct (2) and through the first outflow duct (3) and the second outflow duct (4).

3. Device (1) according to claim 1 or 2, **characterised in that** the inflow duct (2) comprises at least one coarse particulate filter (21), which is preferably a filter of filter class G3 or G4, and/or at least one fine particulate filter (23, 24), which is preferably a filter of filter class M5 to F9.

4. Device (1) according to claim 3, **characterised in that** a first fine particulate filter (23) of filter class M5 or M6 is provided and a second fine particulate filter (24) of filter class F7 to F9 is provided downstream of the first fine particulate filter (23).

5. Device (1) according to any one of the preceding claims, **characterised in that** the inflow duct (2) comprises a sound absorber (22) for sound attenuation.

6. Device (1) according to any one of the preceding claims, **characterised in that** the first outflow duct (3) comprises a heat exchanger (31).

7. Device (1) according to any one of the preceding claims, **characterised in that** the first outflow duct (3) comprises a high-efficiency particulate air filter (33), wherein the high-efficiency particulate air filter (33) is preferably a filter of filter class E10 to U16, particularly preferably of filter class H13 or H14.

8. Device (1) according to any one of the preceding claims, **characterised in that** the first outflow duct (3) comprises a sterilisation device (32) for sterilising the regions of the first outflow duct (3) downstream lying downstream of the sterilisation device (32), wherein the sterilisation device is preferably an H₂O₂ injector.

9. Device (1) according to any one of the preceding claims, **characterised in that** the second outflow duct (4) comprises a heat exchanger (43) mounted downstream of the dehumidification device (41,42).

10. Device (1) according to any one of the preceding claims, **characterised in that** the second outflow duct (4) comprises a sterilisation device (44) for sterilising the regions of the second outflow duct (4) lying downstream of the sterilisation device (44), wherein the sterilisation device is preferably an H₂O₂ injector.

11. Device (1) according to any one of the preceding claims, **characterised in that** the second outflow duct (4) comprises a high-efficiency particulate air filter (45), wherein the high-efficiency particulate air filter (45) is preferably a filter of filter class E10 to U16, particularly preferably of filter class H13 or H14.

12. Device (1) according to any one of the preceding claims, **characterised in that** the dehumidification device comprises an air cooler (41) and a droplet separator (42).

13. Device (1) according to any one of the preceding claims, **characterised in that** the inflow duct (2), the first outflow duct (3) and the second outflow duct (4) are accommodated in a common housing (5).

14. Device (1) according to any one of the preceding claims, **characterised in that** the first outflow duct (3) and the second outflow duct (4) are guided parallel to one another out of the inflow duct (2).

15. Device (1) according to any one of the preceding claims, **characterised in that** an exhaust fan (6) is provided for discharging air from the blowing clean room or the filling clean room.

## Revendications

1. Dispositif (1) pour la fourniture d'air pur dans une installation de remplissage de boissons, comprenant un canal d'admission (2) avec au moins un filtre (21, 23, 24) pour le prétraitement de l'air aspiré via une amenée d'air frais (20), dans lequel un premier canal d'admission (3) avec au moins un filtre (33) pour le traitement de l'air prétraité dans le canal d'admission (2) se raccorde au canal d'admission (2) pour l'alimentation dans un espace pur de remplissage de l'installation de remplissage de boissons, ce qui permet de pouvoir fournir de l'air pur séché via le premier canal d'écoulement,
**caractérisé en ce que**
un second canal d'écoulement (4) se raccorde au canal d'admission (2) pour le traitement de l'air prétraité dans le canal d'admission (2) pour l'alimentation dans un espace pur de soufflage pour le moulage par soufflage de récipients en matière plastique, dans lequel un dispositif de déshumidification (41, 42) pour la déshumidification de l'air prétraité est agencé dans le second canal d'écoulement (4), ce qui permet de pouvoir fournir de l'air pur séché via le second canal d'écoulement.

2. Dispositif (1) selon la revendication 1, **caractérisé en ce que** le canal d'admission (2) comprend un ventilateur (25) central qui transporte l'air amené via l'amenée d'air frais (20) non seulement par le canal d'admission (2) mais aussi par le premier canal d'écoulement (3) et le second canal d'écoulement (4).

3. Dispositif (1) selon la revendication 1 ou 2, **caractérisé en ce que** le canal d'admission (2) comprend au moins un filtre à grosses particules (21) qui est de préférence un filtre de la classe de filtre G3 ou G4, et/ou au moins un filtre à fines particules (23, 24) qui est de préférence un filtre de la classe de filtre M5 à F9.

4. Dispositif (1) selon la revendication 3, **caractérisé en ce qu'**un premier filtre à fines particules (23) de la classe de filtre M5 ou M6 est prévu et un second filtre à fines particules (24) de la classe de filtre F7 à F9 est prévu en aval du premier filtre à fines particules (23).

5. Dispositif (1) selon l'une des revendications précédentes, **caractérisé en ce que** le canal d'admission (2) comprend un amortisseur de bruit (22) pour l'atténuation du bruit.

6. Dispositif (1) selon l'une des revendications précédentes, **caractérisé en ce que** le premier canal d'écoulement (3) comprend un échangeur de chaleur (31).

7. Dispositif (1) selon l'une des revendications précédentes, **caractérisé en ce que** le premier canal d'écoulement (3) comprend un filtre à particules en suspension (33), dans lequel le filtre à particules en suspension (33) est de préférence un filtre de la classe de filtre E10 à U16, le plus préférentiellement de la classe de filtre H13 ou H14.

8. Dispositif (1) selon l'une des revendications précédentes, **caractérisé en ce que** le premier canal d'écoulement (3) comprend un dispositif de stérilisation (32) pour la stérilisation des zones se trouvant en aval du dispositif de stérilisation (32) du premier canal d'écoulement (3), dans lequel le dispositif de stérilisation est de préférence un injecteur H2O2.

9. Dispositif (1) selon l'une des revendications précédentes, **caractérisé en ce que** le second canal d'écoulement (4) comprend un échangeur de chaleur (43) logé après le dispositif de déshumidification (41, 42).

10. Dispositif (1) selon l'une des revendications précédentes, **caractérisé en ce que** le second canal d'écoulement (4) comprend un dispositif de stérilisation (44) pour la stérilisation des zones se trouvant en aval du dispositif de stérilisation (44) du second canal d'écoulement (4), dans lequel le dispositif de stérilisation est de préférence un injecteur H₂O₂.

11. Dispositif (1) selon l'une des revendications précédentes, **caractérisé en ce que** le second canal d'écoulement (4) comprend un filtre à particules en suspension (45), dans lequel le filtre à particules en suspension (45) est de préférence un filtre de la classe de filtre E10 à U16, le plus préférentiellement de la classe de filtre H13 ou H14.

12. Dispositif (1) selon l'une des revendications précédentes, **caractérisé en ce que** le dispositif de déshumidification comprend un refroidisseur d'air (41) et un séparateur de gouttes (42).

13. Dispositif (1) selon l'une des revendications précédentes, **caractérisé en ce que** le canal d'admission (2), le premier canal d'écoulement (3) et le second canal d'écoulement (4) sont reçus dans un boîtier (5) commun.

14. Dispositif (1) selon l'une des revendications précédentes, **caractérisé en ce que** le premier canal d'écoulement (3) et le second canal d'écoulement (4) sont guidés parallèlement l'un à l'autre à partir du canal d'admission (2).

15. Dispositif (1) selon l'une des revendications précédentes, **caractérisé en ce qu'**un ventilateur d'évacuation d'air (6) est prévu pour l'évacuation d'air de l'espace pur de soufflage ou de l'espace pur de remplissage.
